# DEMANDE DE BREVET EUROPEEN

(11) **EP 1 241 332 A1**
(43) Date de publication de la demande: **18.09.2002**
(21) Numéro de dépôt: 02290664.8
(22) Date de dépôt: 15.03.2002
(51) Int. Cl.: F02B 23/06, F02F 3/26

(54) **Toit de culasse**

(30) Priorité: 16.03.2001 FR 0103577
(71) Demandeur: Renault s.a.s., 92100 Boulogne Billancourt (FR)
(72) Inventeur: Passerel, Daniel, 92500 Rueil Malmaison (FR)

(57) **Abrégé**

Toit de culasse de chambre de combustion de moteur à injection directe comprenant un injecteur (1) à carburant, au moins une soupape (10) d'admission, au moins une soupape (11) d'échappement, caractérisé en ce qu'il comprend au voisinage de l'injecteur (1) des moyens (6) de réflexion vers le ou les jets (8) de carburant, des ondes de choc générées par le ou les jets (8) de carburant lors de l'injection.

## Description

La présente invention concerne un toit de culasse d'une chambre de combustion pour moteur à injection directe. La présente invention s'applique plus particulièrement à un toit de culasse de moteur diesel à injection directe.

Dans un moteur diesel à injection directe, le compromis performances/pollution du moteur est amélioré en fragmentant le plus possible les gouttelettes de carburant injectées dans la chambre de combustion.

Il est connu dans le domaine de l'injection directe qu'en augmentant la pression d'injection on améliore la combustion du carburant. Cependant, l'augmentation de la pression d'injection nécessite des dispositifs coûteux.

De même, pour augmenter le rendement de la combustion, il est connu de générer un flux tourbillonnaire appelé couramment swirl en adoptant une géométrie et une disposition particulière des conduits d'admissions. Cependant, lorsque la géométrie des tubulures d'admission devient trop complexe, elle induit des pertes de charges et donc un remplissage moindre de la chambre en air frais.

La présente invention à pour but de pallier des inconvénients de l'art antérieur en proposant un toit de culasse favorisant la fragmentation des gouttes de carburant dans la chambre de combustion.

Ce but est atteint par un toit de culasse de chambre de combustion de moteur à injection directe caractérisé en ce qu'il comprend au voisinage de l'injecteur des moyens de réflexion vers le ou les jets de carburant, d'ondes de choc générées par le ou les jets de carburant lors de l'injection.

Selon une autre particularité, les moyens de réflexion comprennent une rampe de compression centrée sur l'injecteur et comprenant en vis-à-vis du ou des trous d'injection, une surface inclinée par rapport au toit de culasse selon un angle déterminé, l'angle étant déterminé de sorte que l'onde de choc incidente soit réfléchie vers le ou les jets de carburant.

Selon une autre particularité, les moyens de réflexion comprennent une rampe de compression centrée sur l'injecteur et comprenant en vis-à-vis du ou des trous d'injection, une surface incurvée de sorte que l'onde de choc incidente soit réfléchie vers le ou les jets de carburant.

Selon une autre particularité, les dimensions des moyens de réflexion sont déterminées pour se loger sur une surface du toit de culasse située dans l'axe du cylindre et délimitée par la périphérie de la ou des soupapes d'admission et de la ou des soupapes d'échappement.

Selon une autre particularité, l'angle de la surface inclinée correspond sensiblement à l'angle du jet de carburant par rapport à la surface du toit de culasse.

Selon une autre particularité, la hauteur de la rampe de compression est déterminée pour ne pas couper la trajectoire du jet de carburant.

Selon une autre particularité, la forme de la surface incurvée est concave ou convexe.

Selon une autre particularité, la surface incurvée est sphérique ou parabolique ou hyperbolique.

D'autres particularités et avantages de la présente invention apparaîtront plus clairement dans la description ci-après faite en référence aux dessins annexés dans lesquels

Les figures 1A et 1B représentent une vue simplifiée en coupe axiale d'une chambre de combustion de moteur diesel à injection directe selon deux variantes de réalisation.

La figure 2 représente une vue de dessus d'un toit de culasse à 4 soupapes par cylindre, conforme à l'idée de l'invention.

La figure 3 représente une série de 8 clichés pris tous les 25µs lors de l'injection de carburant.

Avant de décrire l'invention et afin de mieux comprendre son principe il convient de faire quelques rappels. Tout d'abord, selon un principe physique, tout corps animé d'une vitesse supérieure à celle du son du fluide dans lequel il sa déplace engendre, selon sa géométrie, au moins une onde de choc.

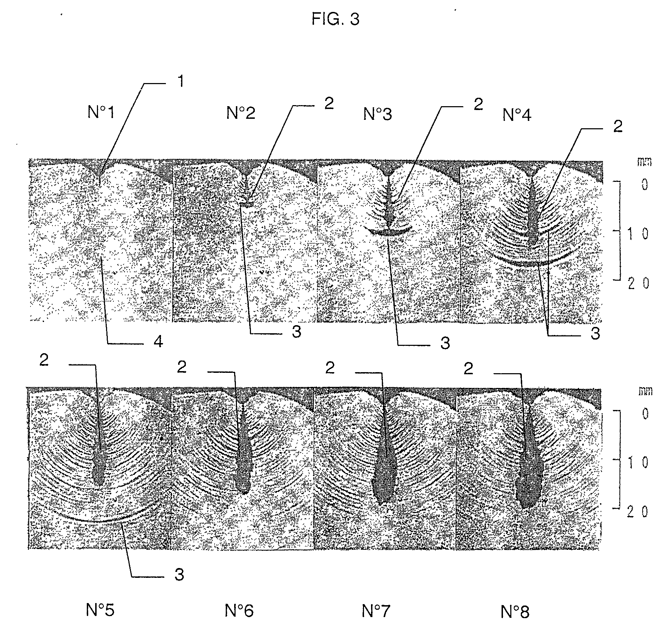

Ce phénomène se produit sous certaines conditions lors de l'injection d'un jet de carburant dans une chambre de combustion d'un moteur à injection directe. En effet, lorsque l'on augmente la pression d'injection de carburant dans la chambre de combustion on améliore la qualité de la combustion notamment pour les moteurs diesels. La figure 3 représente une série de clichés réalisés dans une enceinte où règne une pression de 2MPa, lors de l'injection de carburant à une pression de 150MPa par un trou d'un diamètre de 190µm. La photo N°1 est réalisée juste avant l'entrée du jet de carburant dans l'enceinte. Les photos N°2 à 8 montrent l'évolution du jet de carburant. Dès l'entrée dans l'enceinte (photo N°2) une onde de choc est générée à l'avant du jet de carburant. Ensuite, l'onde de choc se développe sur les côtés du jet (photo N°3). Enfin, l'onde de choc se propage (photo N°4 à N°8) dans l'enceinte au fur et à mesure de la pénétration du jet dans l'enceinte.

Dans des conditions normales de fonctionnement d'un moteur diesel à injection directe, la température du mélange air frais/gaz brûlés contenu dans la chambre de combustion varie entre 500K et 900K lors de l'injection de carburant. Or, la vitesse du son, dans les gaz enfermés dans la chambre de combustion, est de l'ordre de 450m/s à 500K. Selon le principe physique énoncé précédemment, et sachant que la pression dans la chambre de combustion est de l'ordre de 50MPa, la pression d'injection du carburant, doit être supérieure à 900bar pour que le jet de carburant génère des ondes de choc.

La première idée de l'invention est d'utiliser les ondes de choc générées par le jet de carburant pour fractionner les gouttes du jet de carburant de façon à améliorer la qualité combustion.

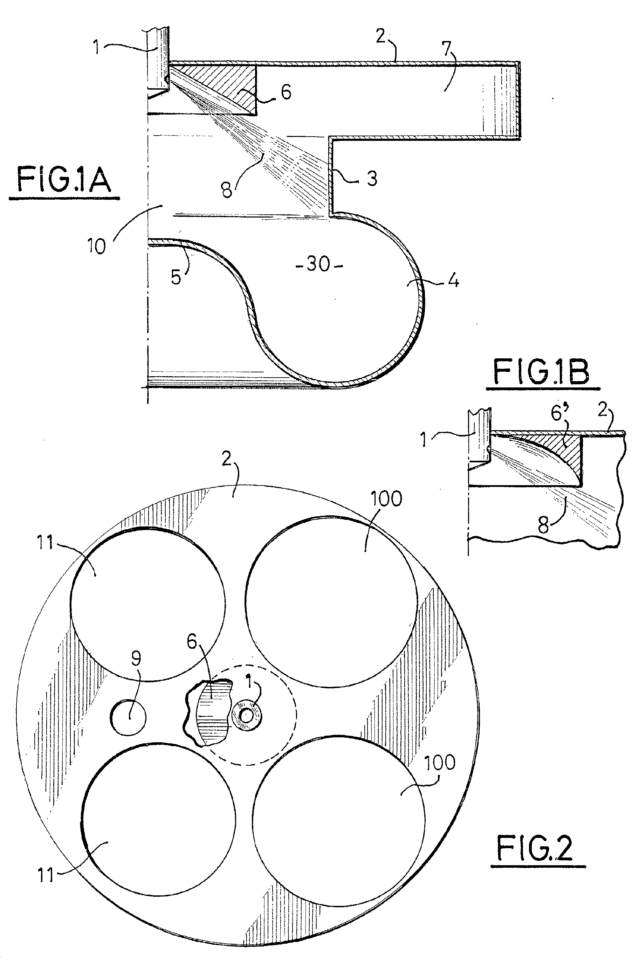

La présente invention va à présent être décrite en référence aux figures 1A, 1B et 2. Les figures représentent des vues schématiques d'un toit de culasse et d'une chambre de combustion d'un moteur diesel à injection directe. Cependant l'invention s'applique également à des moteurs à injection directe en général dans la mesure où l'injection du carburant dans la chambre de combustion génère une onde de choc.

Pour un moteur diesel, une chambre (10) de combustion est délimitée par la culasse (2), le cylindre (7) et le bol de piston (30). Le bol (30) se décompose en trois parties, les lèvres (3), la partie torique (4) du bol et le téton (5) du bol (30). Le carburant est injecté dans la chambre (10) de combustion par l'intermédiaire d'un injecteur (1) placé dans la culasse, en règle générale dans l'intersection entre la lèvre (3) et la partie torique (4). L'injecteur (1) comprend sur sa périphérie au moins un trou par lequel le carburant est injecté en formant un jet (8). L'axe de chaque trou dans l'injecteur (1) détermine l'angle du jet par rapport à la culasse (2). Chaque cylindre (7) comprend au moins une soupape (100) d'admission et au moins une soupape (11) d'échappement. Pour un moteur Diesel le cylindre (7) comprend également une bougie (9) de réchauffage.

L'invention consiste à placer dans la chambre (10) de combustion et au voisinage de l'injecteur (1) des moyens (6) de réflexion des ondes de choc générées par l'injection de carburant dans la chambre (10) de combustion. Ces moyens (6) ont donc comme fonction principale de réfléchir les ondes de choc générés par le jet (8) de carburant vers le jet lui-même. Ainsi, lorsque les ondes de choc réfléchies entrent à nouveau en contact avec le jet (8) de carburant, elles fractionnent les gouttes de carburant en des gouttes de plus petites tailles. Ce fractionnement des gouttes de carburant assure une meilleure vaporisation du carburant et contribue ainsi à améliorer la combustion du carburant.

Selon l'invention, les moyens (6) de réflexion sont positionnés dans un volume dit mort de la chambre (10) de combustion. En règle générale, ce volume mort est situé dans l'axe du cylindre (7) et entre les soupapes (100, 11) d'admission et d'échappement. En fait, le volume dans lequel les moyens (6) de réflexion sont positionnés, n'a pas de fonction. Selon une première variante représentée à la figure 1A, les moyens (6) de réflexion comprennent une rampe de compression présentant en vis-à-vis de l'injecteur une surface inclinée par rapport au toit de culasse (2) selon un angle déterminé. Cette surface constitue la surface de réflexion de l'onde de choc. Selon la variante de réalisation représentée aux figures 1A, et 2 la rampe (6) de compression est une pièce de révolution dont la section axiale est, par exemple, un triangle rectangle. L'hypoténuse de ce triangle forme alors la surface inclinée. Selon l'invention, l'angle d'inclinaison de la surface (6) est définie pour que les ondes de choc incidentes soient réfléchies vers le jet de carburant. Selon la variante de réalisation représentée aux figures 1A et 2, l'angle de la surface inclinée correspond sensiblement à l'angle du jet de carburant par rapport au toit de culasse. Les dimensions de la rampe (6) de compression sont choisies de sorte que la surface inclinée soit le plus proche possible du jet de carburant sans pour autant couper sa trajectoire. De même, les dimensions de la rampe de compression et notamment son diamètre, sont choisies de façon à ne pas obstruer le flux d'admission. Lorsque la rampe (6) de compression est mise en place sur une culasse de moteur diesel, celle-ci ne doit pas gêner la mise en place et le fonctionnement de la bougie (9) de préchauffage.

Dans une autre variante de réalisation, représentée à la figure 1B, la rampe de compression comprend en vis-à-vis de l'injecteur, une surface (6') incurvée. Selon la figure 1B, la surface incurvée est convexe. Cependant, il est possible d'adopter une surface concave. De même, la forme de la courbure de la surface (6') peut être sphérique ou parabolique ou hyperbolique ou encore une combinaison de ces formes de façon à réfléchir l'onde de choc générée par l'injection du jet de carburant vers le jet lui-même.

La rampe (6) de compression est fabriquée, par exemple, à la coulée en même temps que la culasse (2). Dans une autre variante de fabrication la rampe de compression est une pièce rapportée.

Selon la forme choisie, la rampe (6) de compression permet également d'améliorer l'oxydation des suies créées lors de la combustion. En effet, lors de la détente, la combustion se propage du bol où elle est initiée vers le cylindre (2). La rampe (6) de compression rétrécit la section de passage, ce qui permet d'accélérer l'écoulement lors du transvasement et ainsi de mieux oxyder les suies. Les performances du moteur à pleine charge sont donc améliorées.

## Revendications

1. Toit de culasse de chambre de combustion de moteur à injection directe comprenant un injecteur (1) à carburant, au moins une soupape (10) d'admission, au moins une soupape (11) d'échappement, **caractérisé en ce qu'**il comprend au voisinage de l'injecteur (1) des moyens (6) de réflexion vers le ou les jets (8) de carburant, des ondes de choc générées par le ou les jets (8) de carburant lors de l'injection.

2. Toit de culasse selon la revendication 1, **caractérisée en ce que** les moyens (6) de réflexion comprennent une rampe de compression centrée sur l'injecteur (1) et comprenant en vis-à-vis du ou des trous d'injection, une surface inclinée par rapport au toit de culasse selon un angle déterminé, l'angle étant déterminé de sorte que les ondes de choc incidentes soient réfléchies vers le ou les jets (8) de carburant.

3. Toit de culasse selon la revendication 1, **caractérisée en ce que** les moyens de réflexion comprennent une rampe (6') de compression centrée sur l'injecteur et comprenant en vis-à-vis du ou des trous d'injection, une surface incurvée de sorte que les ondes de choc incidentes soient réfléchies vers le ou les jets de carburant.

4. Toit de culasse selon l'une des revendications 1 à 3, **caractérisée en ce que** les dimensions des moyens de réflexion soient déterminées pour se loger sur une surface du toit de culasse (2) située dans l'axe du cylindre (7) et délimitée par la périphérie de la ou des soupapes (10) d'admission et de la ou des soupapes (11) d'échappement.

5. Toit de culasse selon la revendication 2, **caractérisée en ce que** l'angle de la surface inclinée correspond sensiblement à l'angle du jet de carburant par rapport à la surface du toit de culasse (2).

6. Toit de culasse selon l'une des revendications 2 à 5, **caractérisée en ce que** la hauteur de la rampe de compression est déterminée pour ne pas couper la trajectoire du jet de carburant.

7. Toit de culasse selon la revendication 3, **caractérisée en ce que** la forme de la surface incurvée est concave ou convexe.

8. Toit de culasse selon la revendication 7, **caractérisée en ce que** la surface incurvée est sphérique ou parabolique ou hyperbolique.
